# EUROPEAN PATENT SPECIFICATION

(11) **EP 3 416 859 B1**
(45) Date of publication and mention of the grant of the patent: **07.12.2022**
(21) Application number: 16704254.8
(22) Date of filing: 15.02.2016
(51) Int. Cl.: B60S 1/38, B60S 1/40

(54) **WINDSCREEN WIPER DEVICE**
SCHEIBENWISCHERVORRICHTUNG
DISPOSITIF D'ESSUIE-GLACE

(43) Date of publication of application: 26.12.2018
(73) Proprietor: Federal-Mogul S.A., 6790 Aubange (BE)
(72) Inventor: BOLAND, Xavier, 6700 Arlon (BE)
(74) Representative: Hooiveld, Arjen Jan Winfried
(86) International application number: PCT/EP2016/053149
(87) International publication number: WO 2017/140339

(56) References cited:
- EP-A1- 0 304 204
- EP-A1- 1 681 216
- WO-A1-2004/024520
- WO-A1-2013/170877
- DE-A1- 10 228 494
- US-A- 4 094 039

## Description

The present invention relates to a windscreen wiper device of the flat blade type comprising an elastic, elongated carrier element, as well as an elongated wiper blade of a flexible material, which can be placed in abutment with a windscreen to be wiped, which wiper blade includes at least one groove, in which groove a longitudinal strip of the carrier element is disposed, which windscreen wiper device comprises a connecting device for an oscillating arm, wherein said oscillating arm can be pivotally connected to said connecting device about a pivot axis near one end thereof. Said longitudinal strip is also called a "flexor", while said connecting device is also indicated as a "connector".

Preferably, said wiper blade comprises a spoiler at a side thereof facing away from the windscreen to be wiped. The spoiler is also called an "air deflector" and is preferably made in one piece with said wiper blade. Said wiper blade and said spoiler are preferably made through extrusion.

In use, said oscillating arm is connected to a mounting head mounted on a drive shaft, wherein said oscillating arm at one end thereof is pivotally connected to the mounting head by means of a pivot pin and at another end thereof is connected to said wiper blade placed in abutment with said windscreen to be wiped. In use, the shaft rotates alternately in a clockwise and in a counter-clockwise sense carrying the mounting head into rotation also, which in turn draws the oscillating arm into rotation and by means of said connecting device moves the wiper blade. Said oscillating arm can thus oscillate to-and-from between a first and second reversal positions.

It is noted that the present invention is not restricted to automobiles, but also refers to rail coaches and other (fast) vehicles.

Further, it is noted that the present invention is not restricted to the use of only one longitudinal strip forming the elastic carrier element that is particularly located in a central longitudinal groove of the wiper blade. Instead, said carrier element may also comprise two longitudinal strips, wherein said strips are disposed in opposite longitudinal grooves of the wiper blade. Said groove(s) may be closed at one outer end.

The present invention also relates to a connecting device arranged for use in such a windscreen wiper device.

Such a windscreen wiper device is generally known. This prior art windscreen wiper device is designed as a "flat blade" or "yokeless blade", wherein no use is made of several yokes pivotally connected to each other, but wherein the wiper blade is biased by the carrier element, as a result of which it exhibits a specific curvature.

In practice it has become apparent that, during use of the known windscreen wiper device, high forces are exerted on the connection between the connecting device and the oscillating arm. As a consequence thereof the wiper blade may get loose from the oscillating arm.

The object of the invention is to provide a windscreen wiper device, wherein the connecting device and the oscillating arm are connected in an improved manner, using a minimum of parts.

Thereto, a windscreen wiper device of the type referred to in the introduction is characterized according to the invention in that said connecting device comprising at least two parts provided with protrusion/hole means for detachably connecting said parts together, wherein the first part is retained onto the wiper blade and wherein the second part comprises a channel for receiving a rod-like extension of said oscillating arm , wherein said windscreen wiper device is provided with first and second retention means for retaining said connecting device onto said oscillating arm, wherein the first retention means are formed by protrusion/recess means on said rod-like extension of the oscillating arm and on said channel for snappingly interconnecting said rod-like extension of the oscillating arm and the second part of the connecting device, and wherein a force for deactivating the first retention means is smaller than a force deactivating the second retention means, wherein said first retention means are arranged to be active in a wiping position and in a service position of the oscillating arm, while said second retention means are arranged to be only active in the wiping position of the oscillating arm. Particularly, said channel has a closed circumference. More in particular, said channel is formed by a blind hole having a closed circumference. Even more in particular, said rod-like extension and said channel have a rectangular cross-section.

In accordance with the invention the first retentions means and the second retentions means are each retaining the wiper blade onto the oscillating arm through a connection using protrusion/hole means on the connecting device and the oscillating arm, wherein a force for deactivating (that is releasing) said snapping connection of the first retention means is smaller than a force deactivating a connection of the second retention means. Said force for releasing said snapping connection of the first retention means is preferably lying between 10 and 30 N. Said first retention means are arranged to be active in a wiping position and in a service position of the oscillating arm, while said second retention means are arranged to be only active in the wiping position (and not in the service position) of the oscillating arm. Consequently, in the service position the wiper blade can be easily mounted to or dismounted from the oscillating arm (for replacement or repair thereof, for example), as only a small force for activating or deactivating (i.e. releasing) said snapping connection of the first retention means is needed. In the wiping position of the oscillating arm the second retention means serve retain the wiper blade onto the oscillating arm, also in case the first retention means would disfunction or fail.

International patent publication no. WO2004/024520 discloses a windscreen wiper device according to the preamble of claim 1.

Preferably, said rod-like extension of the oscillating arm comprises at least one hole cooperating with a protrusion of said channel. Said rod-like extension of the oscillating arm particularly comprises at least two opposing holes cooperating with at least two opposing protrusions of said channel. Said two opposing holes are preferably arranged on two respective opposing side walls of said rod-like extension of the oscillating arm, wherein said two opposing protrusions are arranged on two respective lateral sides of said channel. Said second part comprises a lever provided with said protrusion, wherein said lever is hingeable between an inward position, wherein said oscillating arm is retained on said second part and an outward position, wherein said oscillating arm is released from said second part. More in particular, said lever is hingeable along hinges of said second part located on opposite sides of the oscillating arm in mounted position thereof, i.e. on opposite sides of the channel arranged for inserting said oscillating arm therein. Said second part and said lever are preferably made of one piece. When said first and said second part are snapped together, said lever is preferably not visible from the outside. Particularly, said lever is hingeable between said inward position and said outward position by moving said connecting device relative to said oscillating arm in longitudinal direction of said arm (by hand). Preferably, said first part comprises engaging members made integral therewith for engaging around the longitudinal sides of the longitudinal strips that face away from each other (in case of two flexors) or around the longitudinal sides of the wiper blade that face away from each other (in case of one central flexor). In other words, the engaging members each form a groove for introducing the longitudinal sides therein, so that the first part of the connecting device is firmly retained onto the wiper blade. In order to enhance the retention thereof the engaging members may be welded, soldered, brazed or glued to the longitudinal strips.

In the windscreen wiper device in accordance with the invention said rod-like extension of the oscillating arm comprises at least one protrusion cooperating with a hole of said channel. In particular, said rod-like extension of the oscillating arm comprises at least two opposing protrusions cooperating with at least two opposing holes of said channel. Said two opposing protrusions are preferably arranged on two respective opposing side walls of said rod-like extension of the oscillating arm, wherein said two opposing holes are arranged on two respective lateral sides of said channel.

In another preferred embodiment of a windscreen wiper device according to the invention the second retention means are formed by at least one protrusion provided on the first part arranged to engage into a correspondingly shaped hole in said rod-like extension of the oscillating arm.

In another preferred embodiment of a windscreen wiper device in accordance with the invention said hole having an open circumference is provided on a longitudinal side said rod-like extension of the oscillating arm. According to the invention said protrusion extends upwardly from said first part. Said protrusion is preferably arranged to engage into said hole in a wiping position of said oscillating arm, wherein said protrusion is arranged to disengage from said hole in a service position of said oscillating arm. In other words, said second retention means are active in the wiping position of said oscillating arm and inactive in the service position of said oscillating arm. The first retention means are always active, i.e. in both the wiping and service positions. Hence, in the service position the wiper blade can be easily mounted on or dismounted from the oscillating arm, as only a minor force is needed for the first retention means.

In another preferred embodiment of a windscreen wiper device according to the invention said first part is positioned at least substantially within said second part. Preferably, said second part has an at least substantially U-shaped cross-section at the location of its connection to said first part, wherein said first part comprises two cylindrical protuberances extending outwards on either side thereof and snappingly engaging into identically shaped cylindrical holes in said legs of said U-shaped cross-section of said second part.

In another preferred embodiment of a windscreen wiper device in accordance with the invention said second part is positioned at least substantially within said first part. Preferably, said second part has an at least substantially U-shaped cross-section at the location of its connection to said first part, wherein said second part comprises two cylindrical protuberances extending outwards on either leg of the U-shaped cross-section thereof and snappingly engaging into identically shaped cylindrical holes in opposite sides of said first part. Each leg of said U-shaped cross-section of said second part is allowed to bend outwardly upon insertion of the rod-like extension of the oscillating arm into the channel thereof for connecting said first and second parts together through a snapping operation.

The invention will now be explained in more detail with reference to figures illustrated in a drawing, wherein

The invention will now be explained in more detail with reference to figures illustrated in a drawing, wherein
- Figure 1A is a schematic and perspective view of a windscreen wiper device and (a part of) an oscillating arm according to the invention;
- Figure IB is a schematic and perspective view of a part of the windscreen wiper device of figure 1, wherein a first part and a second part of a connecting device of said windscreen wiper device is shown connected to said oscillating arm;
- Figures 2A through 2C are side views of said first part and said second part of said connecting device shown in figure 1B, explaining in steps how to retain and to release a unit consisting of a wiper blade and said connecting device on and from said oscillating arm, respectively;
- Figures 3A and 3B are a top view and a perspective view of said oscillating arm, respectively; and
- Figure 4 is a side view of said first part and said second part of said connecting device shown in figure 1B, but pivoted relative to one another.

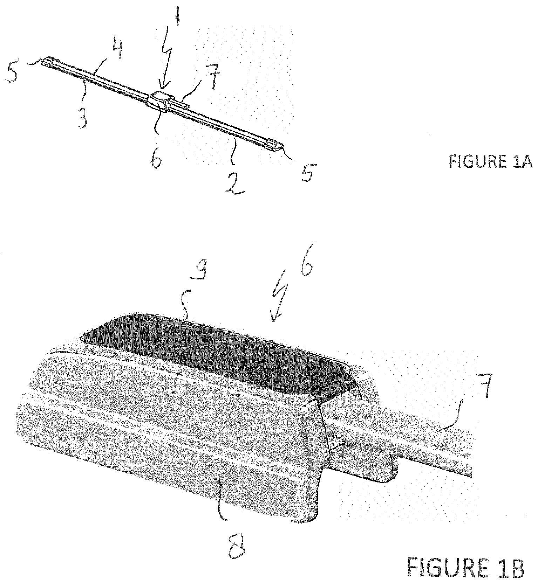

Figure 1A shows a windscreen wiper device 1 of the "flat blade" type according to the invention. Said windscreen wiper device 1 is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biased in a curved position (the curvature in operative position being that of a windscreen to be wiped). Neighbouring ends of strips 4 are interconnected on either side of the windscreen wiper device 1 by means of connecting pieces 5 functioning as clamping members. In this embodiment, the connecting pieces may be separate constructional elements, which may be form-locked ("positive locking" or "having positive fit"), as well as force-locked to the ends of strips 4. In another preferred variant, said connecting pieces are in one piece with the strips 4 made of spring band steel. In the latter case said connecting pieces form transverse bridges for the strips 4, as it were. Possibly, a spoiler is furthermore provided.

The windscreen wiper device 1 is furthermore built up of a connecting device 6 of plastic material for an oscillating wiper arm 7. Said wiper arm 7 is finalized by an extension (without an adapter). Connecting device 6 consists of a first part 8 and a second part 9 detachably connected together. Said first part 8 is retained onto the wiper blade 2, whereas said second part 9 is positioned within said first part 8, that is between parallel, upright walls thereof. Further, said first part 8 comprises clamping members 10 that are integral therewith, which engage round longitudinal sides of the strips 4 that face away from each other, as a result of which the connecting device 6 is firmly attached to the unit consisting of wiper blade 2 and strips 4. Said second part 9 has a U-shaped cross-section at the location of its connection to said first part 8. The oscillating wiper arm 7 is pivotally connected to the connecting device 6 about a pivot axis near a free end thereof, and that in the following manner.

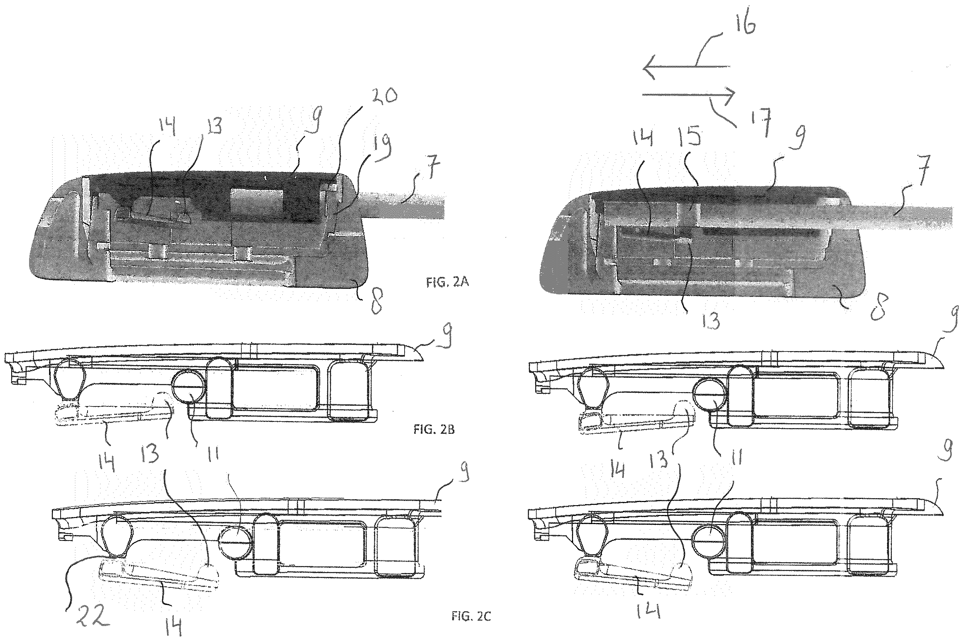

With reference to figures 1 and 2, said second part 9 comprises two cylindrical protrusions 11 (only one is visible) extending outwards on either side of said second part 9, that is on each vertical side wall of its U-shaped, rectangular or square cross-section. These protrusions 11 pivotally engage in identically shaped cylindrical holes 12 (only one thereof is visible in figures 1 and 2) of said first part 8. Said protrusions 11 act as bearing surfaces at the location of a pivot axis in order to pivot the second part 9 (and the oscillating wiper arm 7 attached thereto) about said pivot axis near a free end of said arm 7. The protrusions 11 are preferably in one piece with said second part 9. In the alternative, the protrusions 11 are part of a single pivot pin perpendicular to the connecting device 6.

Referring to figures 2A through 2C, the second part 9 comprises a protrusion 13 extending upwardly from a free end of a lever 14 inside said second part 9, while the oscillating arm 7 has an identically shaped hole 15 with a closed circumference at the location of its connection to said second part 9. Said lever 14 with said protrusion 13 is hingeable relative to said second part 9 between an inward position (see figures 2A and 2B) , wherein in a mounted position said protrusion 13 engages into said hole 15 provided in said oscillating arm 7 in order to retain said connecting device 6 onto said oscillating arm 7, and an outward position (figure 2C), wherein in a dismounted position said protrusion 13 disengages from said hole 15 provided in said oscillating arm 7, allowing said connecting device 6 to be released from said oscillating arm 3. Said lever 14 is hingeable along two lateral hinges (22) located near opposite side walls of said second part 9, upon sliding a unit consisting of said wiper blade 2 and said connecting device 6 relative to said oscillating arm 7 by hand in the direction of arrow 16, i.e. in longitudinal direction of said arm 7. More in particular, by applying a force by hand in the direction of arrow 16, said protrusion 13 of said lever 14 will disengage said hole 15 of said oscillating arm 7. The above unit consisting of said wiper blade 2 and said connecting device 6 may then be released from said oscillating arm 7 by hand. In the same position the above unit consisting of said wiper blade 2 and said connecting device 6 may then be mounted on said oscillating arm 7 by hand. Namely, by moving said connecting device 6 relative to said oscillating arm 7 by hand in the direction of arrow 17, due to its resiliency, said lever 14 will hinge from its outward position (figure 2C) into its inward position (figures 2A and 2B). Said protrusion 13 will then engage said hole 15 of said oscillating arm. The unit is then safely retained onto said oscillating arm 7.

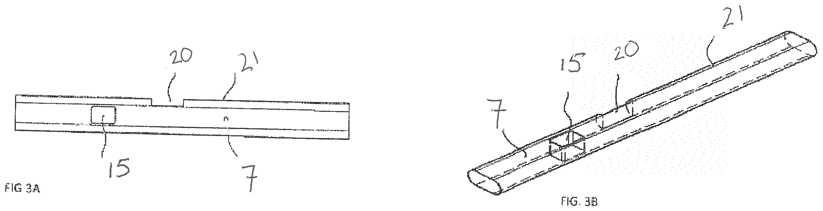

The protrusion 13 on said second part 9 and the hole 15 in the oscillating arm 7 are meant for retaining the connecting device 6 onto the oscillating arm 7 and are therefore called "first retaining means". However, in case the first retaining means would disfunction, for example when the protrusion 13 would not properly fit into the hole 15, the second part 9 and the first part 8 connected thereto would be able to move relative to the oscillating arm 7 in longitudinal direction of the wiper blade 2. In order to avoid the wiper blade 2 from coming loose, with all negative consequences involved, second retaining means are provided for. Said second retaining means consist of an upwardly extending protrusion 19 on at least one of said parallel, upright walls of said first part 8 cooperating with a recess 20 in the oscillating arm 7 (figures 2A and 3). In other words, said protrusion 19 engages into said correspondingly shaped recess 20 provided on a longitudinal (exterior) side 21 of the oscillating arm 7. Said protrusion 19 may also be called a cam.

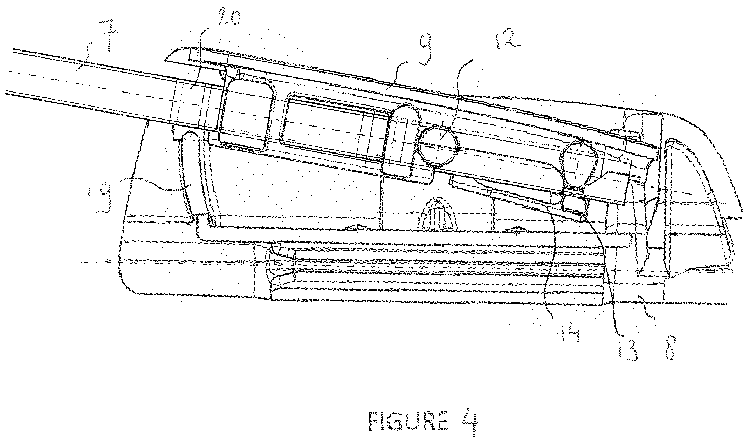

For mounting or dismounting the connecting device 6 onto or from the oscillating arm 7, the second part 9 and thus the free end of the oscillating arm 7 connected thereto is pivoted relative to the first part 8. While carrying out the pivot movement the protrusion or cam 19 is no longer in line with the recess 20 and cannot mutually cooperate any longer, so that the second part 9 and the first part 8 attached thereto can be released from the oscillating arm 7. This can, of course, only be done when also the protrusion 13 in all embodiments is released from the hole 15. This is shown in figure 4.

In accordance with the invention the first retentions means and the second retentions means are each retaining the wiper blade 2 onto the oscillating arm 7 through a connection using protrusion/recess means on the connecting device and the oscillating arm, wherein a force for deactivating (that is releasing) said snapping connection of the first retention means is smaller than a force deactivating said connection of the second retention means. Said force for releasing said snapping connection of the first retention means is preferably lying between 10 and 30 N. Particularly, said first retention means are arranged to be active in a wiping position and in a service position of the oscillating arm, while said second retention means are arranged to be only active in the wiping position (and not in the service position) of the oscillating arm. Consequently, in the service position the wiper blade can be easily mounted to or dismounted from the oscillating arm (for replacement or repair thereof, for example), as only a small force for activating or deactivating (i.e. releasing) said snapping connection of the first retention means is needed. In the wiping position of the oscillating arm the second retention means serve retain the wiper blade onto the oscillating arm, also in case the first retention means would disfunction or fail.

The invention is not restricted to the variants shown in the drawing, but by the embodiments that fall within the scope of the appended claims.

## Claims

1. A windscreen wiper device (1) of the flat blade type comprising an elastic, elongated carrier element, as well as an elongated wiper blade (2) of a flexible material, which can be placed in abutment with a windscreen to be wiped, which wiper blade (2) includes at least one groove (3), in which groove (3) a longitudinal strip (4) of the carrier element is disposed, which windscreen wiper device (1) comprises a connecting device (6) for an oscillating arm (7), wherein said oscillating arm (7) can be pivotally connected to said connecting device (6) about a pivot axis near one end thereof, wherein said connecting device (6) comprising at least two parts (8,9) provided with protrusion/hole (11,12) means for detachably connecting said parts together, wherein the first part (8) is retained onto the wiper blade (2) and wherein the second part (9) comprises a channel for receiving a rod-like extension of said oscillating arm, wherein said windscreen wiper device (1) is provided with first and second retention means for retaining said connecting device (6) onto said oscillating arm (7), wherein the first retention means are formed by protrusion/hole (13,15) means on said rod-like extension of the oscillating arm and on an inner wall of said channel for snappingly interconnecting said rod-like extension of the oscillating arm (7) and the second part (9) of the connecting device (6), and wherein a force for deactivating the first retention means is smaller than a force deactivating the second retention means, **characterized in that** said protrusion (13) of said channel is provided on a lever (14) hingeable due to its resiliency by moving said connecting device (6) relative to said oscillating arm (7) in longitudinal direction thereof by hand between an inward position, wherein said oscillating arm (7) is retained on said second part (9) and an outward position, wherein said oscillating arm (7) is released from said second part, wherein the second retention means are formed by at least one protrusion (19) provided on the first part (8) and extending upwardly from said first part (8) arranged to engage into a correspondingly shaped hole (20) in said rod-like extension of the oscillating arm (7).

2. A windscreen wiper device (1) according to claim 1, wherein said first retention means are arranged to be active in a wiping position and in a service position of the oscillating arm, while said second retention means are arranged to be only active in the wiping position of the oscillating arm.

3. A windscreen wiper device (1) according to claim 1 or 2, wherein said rod-like extension of the oscillating arm (7) comprises at least one hole (15) cooperating with a protrusion (13) of said channel.

4. A windscreen wiper device (1) according to claim 3, wherein said rod-like extension of the oscillating arm (7) comprises at least two opposing holes (15) cooperating with at least two opposing protrusions (13) of said channel.

5. A windscreen wiper device (1) according to claim 4, wherein said two opposing holes (15) are arranged on two respective opposing side walls of said rod-like extension of the oscillating arm (7), and wherein said two opposing protrusions (13) are arranged on two respective lateral sides of said channel.

6. A windscreen wiper device (1) according to any of the preceding claims 1 through 5, wherein said rod-like extension of the oscillating arm (7) comprises at least one protrusion cooperating with a hole of said channel.

7. A windscreen wiper device (1) according to claim 6, wherein said rod-like extension of the oscillating arm (7) comprises at least two opposing protrusions cooperating with at least two opposing holes of said channel.

8. A windscreen wiper device (1) according to claim 7, wherein said two opposing protrusions are arranged on two respective opposing side walls of said rod-like extension of the oscillating arm (7), and wherein said two opposing holes are arranged on two respective lateral sides of said channel.

9. A windscreen wiper device (1) according to any of the preceding claims 1 through 8 , wherein said hole (20) having an open circumference is provided on a longitudinal side (21) of said rod-like extension of the oscillating arm (7).

10. A windscreen wiper device (1) according toany of the preceding claims 1 through 9 , wherein said protrusion (19) is arranged to engage into said hole (20) in a wiping position of said oscillating arm (7), and wherein said protrusion (19) is arranged to disengage from said hole (20) in a service position of said oscillating arm (7).

11. A windscreen wiper device (1) according to any of the preceding claims 1 through 10, wherein said first part (8) is positioned at least substantially within said second part (9).

12. A windscreen wiper device (13) according to claim 11, wherein said second part (9) has an at least substantially U-shaped cross-section at the location of its connection to said first part (8), wherein said first part (9) comprises two cylindrical protuberances (11) extending outwards on either side thereof and snappingly engaging into identically shaped cylindrical holes (12) in said legs of said U-shaped cross-section of said second part (9).

13. A windscreen wiper device (1) according to any of the preceding claims 1 through 10, wherein said second part (9) is positioned at least substantially within said first part (8).

14. A windscreen wiper device (1) according to claim 13, wherein said first part (8) has an at least substantially U-shaped cross-section at the location of its connection to said second part (9), wherein said second part (9) comprises two cylindrical protuberances (11) extending outwards on either leg of the U-shaped cross-section thereof and snappingly engaging into identically shaped cylindrical holes (12) in opposite sides of said first part (8).

## Patentansprüche

1. Scheibenwischervorrichtung (1) des Flachblatttyps, umfassend ein elastisches, langgestrecktes Trägerelement sowie ein langgestrecktes Wischerblatt (2) aus einem flexiblen Material, das in Anlage an eine zu wischende Scheibe angeordnet werden kann, wobei das Wischerblatt (2) wenigstens eine Nut (3) einschließt, wobei in der Nut (3) ein länglicher Streifen (4) des Trägerelements angeordnet ist, wobei die Scheibenwischervorrichtung (1) eine Verbindungsvorrichtung (6) für einen sich hin und her bewegenden Arm (7) umfasst, wobei der sich hin und her bewegende Arm (7) mit der Verbindungsvorrichtung (6) um eine Schwenkachse in der Nähe eines Endes davon schwenkbar verbunden sein kann, wobei die Verbindungsvorrichtung (6) wenigstens zwei Teile (8, 9) umfasst, die mit Vorsprung / Loch (11, 12) -Mitteln zum lösbaren miteinanderverbinden der Teile bereitgestellt sind,
wobei das erste Teil (8) auf dem Wischerblatt (2) gehalten ist und wobei das zweite Teil (9) einen Kanal zur Aufnahme einer stabförmigen Verlängerung des sich hin und her bewegenden Arms umfasst, wobei die Scheibenwischervorrichtung (1) mit ersten und zweiten Haltemitteln zum Halten der Verbindungsvorrichtung (6) auf dem sich hin und her bewegenden Arm (7) bereitgestellt ist, wobei die ersten Haltemittel durch Vorsprung / Loch (13, 15) -Mittel an der stabförmigen Verlängerung des sich hin und her bewegenden Arms und an einer Innenwand des Kanals zum schnappenden miteinanderverbinden der stabförmigen Verlängerung des sich hin und her bewegenden Arms (7) und des zweiten Teils (9) der Verbindungsvorrichtung (6) gebildet sind, und wobei eine Kraft zum Deaktivieren der ersten Rückhaltemittel kleiner ist als eine Kraft zum Deaktivieren der zweiten Rückhaltemittel, **dadurch gekennzeichnet, dass** der Vorsprung (13) des Kanals an einem Hebel (14) bereitgestellt ist, der aufgrund seiner Elastizität durch Bewegen der Verbindungsvorrichtung (6) relativ zu dem sich hin und her bewegenden Arm (7) in dessen Längsrichtung mit der Hand zwischen einer nach innen gerichteten Position, in der der sich hin und her bewegende Arm (7) an dem zweiten Teil (9) gehalten wird, und einer nach außen gerichteten Position, in der der sich hin und her bewegende Arm (7) von dem zweiten Teil gelöst wird, schwenkbar ist, wobei die zweiten Rückhaltemittel durch wenigstens einen Vorsprung (19) gebildet sind, der an dem ersten Teil (8) bereitgestellt ist und sich von dem ersten Teil (8) nach oben erstreckt, der so angeordnet ist, dass er in ein entsprechend geformtes Loch (20) in der stabförmigen Verlängerung des sich hin und her bewegenden Arms (7) eingreift.

2. Scheibenwischervorrichtung (1) nach Anspruch 1, wobei die ersten Haltemittel so angeordnet sind, dass sie in einer Wischposition und in einer Wartungsposition des sich hin und her bewegenden Arms aktiv sind, während die zweiten Haltemittel so angeordnet sind, dass sie nur in der Wischposition des sich hin und her bewegenden Arms aktiv sind.

3. Scheibenwischervorrichtung (1) nach Anspruch 1 oder 2, wobei die stabförmige Verlängerung des sich hin und her bewegenden Arms (7) wenigstens ein Loch (15) umfasst, das mit einem Vorsprung (13) des Kanals zusammenwirkt.

4. Scheibenwischervorrichtung (1) nach Anspruch 3, wobei die stabförmige Verlängerung des sich hin und her bewegenden Arms (7) wenigstens zwei gegenüberliegende Löcher (15) umfasst, die mit wenigstens zwei gegenüberliegenden Vorsprüngen (13) des Kanals zusammenwirken.

5. Scheibenwischervorrichtung (1) nach Anspruch 4, wobei die beiden gegenüberliegenden Löcher (15) an zwei jeweiligen gegenüberliegenden Seitenwänden der stabförmigen Verlängerung des sich hin und her bewegenden Arms (7) angeordnet sind, und wobei die beiden gegenüberliegenden Vorsprünge (13) an zwei jeweiligen lateralen Seiten des Kanals angeordnet sind.

6. Scheibenwischervorrichtung (1) nach einem der vorhergehenden Ansprüche 1 bis 5, wobei
die stabförmige Verlängerung des sich hin und her bewegenden Arms (7) wenigstens einen Vorsprung aufweist, der mit einem Loch des Kanals zusammenwirkt.

7. Scheibenwischervorrichtung (1) nach Anspruch 6, wobei die stabförmige Verlängerung des sich hin und her bewegenden Arms (7) wenigstens zwei gegenüberliegende Vorsprünge aufweist, die mit wenigstens zwei gegenüberliegenden Löchern des Kanals zusammenwirken.

8. Scheibenwischervorrichtung (1) nach Anspruch 7, wobei die beiden gegenüberliegenden Vorsprünge an zwei jeweiligen gegenüberliegenden Seitenwänden der stabförmigen Verlängerung des sich hin und her bewegenden Arms (7) angeordnet sind und wobei die beiden gegenüberliegenden Löcher an zwei jeweiligen lateralen Seiten des Kanals angeordnet sind.

9. Scheibenwischervorrichtung (1) nach einem der vorhergehenden Ansprüche 1 bis 8, wobei das Loch (20) mit einem offenen Umfang an einer Längsseite (21) der stabförmigen Verlängerung des sich hin und her bewegenden Arms (7) bereitgestellt ist.

10. Scheibenwischervorrichtung (1) nach einem der vorangehenden Ansprüche 1 bis 9, wobei der Vorsprung (19) so angeordnet ist, dass er in einer Wischposition des sich hin und her bewegenden Arms (7) in das Loch (20) eingreift, und wobei der Vorsprung (19) so angeordnet ist, dass er sich in einer Wartungsposition des sich hin und her bewegenden Arms (7) aus dem Loch (20) löst.

11. Scheibenwischervorrichtung (1) nach einem der vorangehenden Ansprüche 1 bis 10, wobei das erste Teil (8) wenigstens im Wesentlichen innerhalb des zweiten Teils (9) angeordnet ist.

12. Scheibenwischervorrichtung (13) nach Anspruch 11, wobei das zweite Teil (9) an der Stelle seiner Verbindung mit dem ersten Teil (8) einen wenigstens im Wesentlichen U-förmigen Querschnitt aufweist, wobei das erste Teil (9) zwei zylindrische Ausstülpungen (11) aufweist, die sich auf beiden Seiten davon nach außen erstrecken und in identisch geformte zylindrische Löcher (12) in den Schenkeln des U-förmigen Querschnitts des zweiten Teils (9) schnappend eingreifen.

13. Scheibenwischervorrichtung (1) nach einem der vorangehenden Ansprüche 1 bis 10, wobei das zweite Teil (9) wenigstens im Wesentlichen innerhalb des ersten Teils (8) angeordnet ist.

14. Scheibenwischervorrichtung (1) nach Anspruch 13, wobei das erste Teil (8) an der Stelle seiner Verbindung mit dem zweiten Teil (9) einen wenigstens im Wesentlichen U-förmigen Querschnitt aufweist, wobei der zweite Teil (9) zwei zylindrische Ausstülpungen (11) aufweist, die sich an beiden Schenkeln des U-förmigen Querschnitts davon nach außen erstrecken und in identisch geformte zylindrische Löcher (12) in gegenüberliegenden Seiten des ersten Teils (8) schnappend eingreifen.

## Revendications

1. Dispositif balai d'essuie-glace (1) du type à lame plate, comprenant un élément porteur allongé, élastique, ainsi qu'une lame de balai (2) allongée, réalisée dans un matériau souple, qui peut être placée en butée contre un pare-brise à essuyer, laquelle lame de balai (2) comprend au moins une rainure (3), rainure (3) dans laquelle est disposée une bande longitudinale (4) de l'élément porteur, lequel dispositif balai d'essuie-glace (1) comprend un dispositif de connexion (6) d'un bras oscillant (7), dans lequel ledit bras oscillant (7) peut être connecté de manière pivotante audit dispositif de connexion (6) autour d'un axe de pivot proche d'une extrémité de celui-ci, dans lequel ledit dispositif de connexion (6) comprend au moins deux parties (8, 9) dotées de moyens formant saillie / trou (11, 12) destinés à connecter ensemble de manière amovibles lesdites parties, dans lequel la première partie (8) est retenue sur la lame de balai (2), et dans lequel la seconde partie (9) comprend un canal destiné à recevoir une extension similaire à une tige dudit bras oscillant, dans lequel ledit dispositif balai d'essuie-glace (1) est doté de premier et second moyens de retenue destinés à retenir ledit dispositif de connexion (6) sur ledit bras oscillant (7), dans lequel les premiers moyens de retenue sont constitués par des moyens formant saillie / trou (13, 15) sur ladite extension similaire à une tige du bras oscillant, et sur une paroi intérieure dudit canal, destinés à interconnecter par encliquetage ladite extension similaire à une tige du bras oscillant (7) et la seconde partie (9) du dispositif de connexion (6), et dans lequel la force destinée à désactiver les premiers moyens de retenue, est inférieure à la force destinée à désactiver les seconds moyens de retenue, **caractérisé en ce que** ladite saillie (13) dudit canal est disposée sur un levier (14) pouvant s'articuler en raison de son élasticité par le déplacement dudit dispositif de connexion (6) par rapport audit bras oscillant (7) dans sa direction longitudinale à la main entre une position intérieure, dans laquelle ledit bras oscillant (7) est retenue sur ladite seconde partie (9), et une position extérieure, dans laquelle ledit bras oscillant (7) est libéré de ladite seconde partie, dans lequel les seconds moyens de retenue sont constitués par au moins une saillie (19) disposée sur la première partie (8), et qui s'étend vers le haut à partir de ladite première partie (8), agencée pour venir en prise dans un trou de forme correspondante (20) dans ladite extension similaire à une tige du bras oscillant (7).

2. Dispositif balai d'essuie-glace (1) selon la revendication 1, dans lequel lesdits premiers moyens de retenue sont agencés de façon à être actifs dans une position d'essuyage et dans une position de service du bras oscillant, tandis que lesdits seconds moyens de retenue sont agencés de façon à n'être actifs que dans la position d'essuyage du bras oscillant.

3. Dispositif balai d'essuie-glace (1) selon la revendication 1 ou 2, dans lequel ladite extension similaire à une tige du bras oscillant (7), comprend au moins un trou (15) qui coopère avec une saillie (13) dudit canal.

4. Dispositif balai d'essuie-glace (1) selon la revendication 3, dans lequel ladite extension similaire à une tige du bras oscillant (7), comprend au moins deux trous opposés (15) qui coopèrent avec deux saillies opposées (13) au moins dudit canal.

5. Dispositif balai d'essuie-glace (1) selon la revendication 4, dans lequel lesdits deux trous opposés (15) sont agencés sur deux parois latérales opposées respectives de ladite extension similaire à une tige du bras oscillant (7), et dans lequel lesdites deux saillies opposées (13) sont agencées sur deux côtés latéraux respectifs dudit canal.

6. Dispositif balai d'essuie-glace (1) selon l'une quelconque des revendications précédentes 1 à 5, dans lequel ladite extension similaire à une tige du bras oscillant (7), comprend au moins une saillie qui coopère avec un trou dudit canal.

7. Dispositif balai d'essuie-glace (1) selon la revendication 6, dans lequel ladite extension similaire à une tige du bras oscillant (7), comprend au moins deux saillies opposées qui coopèrent avec deux trous opposés au moins dudit canal.

8. Dispositif balai d'essuie-glace (1) selon la revendication 7, dans lequel lesdites deux saillies opposées sont agencées sur deux parois latérales opposées respectives de ladite extension similaire à une tige du bras oscillant (7), et dans lequel lesdits deux trous opposés sont agencés sur deux côtés latéraux respectifs dudit canal.

9. Dispositif balai d'essuie-glace (1) selon l'une quelconque des revendications précédentes 1 à 8, dans lequel ledit trou (20) qui présente une circonférence ouverte, est disposé sur un côté longitudinal (21) de ladite extension similaire à une tige du bras oscillant (7).

10. Dispositif balai d'essuie-glace (1) selon l'une quelconque des revendications précédentes 1 à 9, dans lequel ladite saillie (19) est agencée afin de venir en prise dans ledit trou (20) dans une position d'essuyage dudit bras oscillant (7), et dans lequel ladite saillie (19) est agencée afin de se désengager dudit trou (20) dans une position de service dudit bras oscillant (7).

11. Dispositif balai d'essuie-glace (1) selon l'une quelconque des revendications précédentes 1 à 10, dans lequel ladite première partie (8) est positionnée, sensiblement au moins, dans ladite seconde partie (9).

12. Dispositif balai d'essuie-glace (13) selon la revendication 11, dans lequel ladite seconde partie (9) présente, sensiblement au moins, une section transversale en forme de U, au niveau de l'emplacement de sa connexion avec ladite première partie (8), dans lequel ladite première partie (9) comprend deux protubérances cylindriques (11) qui s'étendent à l'extérieur de chaque côté de celle-ci, et qui viennent en prise par encliquetage dans des trous cylindriques de forme identique (12), dans lesdites jambes de ladite section transversale en forme de U de ladite seconde partie (9).

13. Dispositif balai d'essuie-glace (1) selon l'une quelconque des revendications précédentes 1 à 10, dans lequel ladite seconde partie (9) est positionnée, sensiblement au moins, dans ladite première partie (8).

14. Dispositif balai d'essuie-glace (1) selon la revendication 13, dans lequel ladite première partie (8) présente, sensiblement au moins, une section transversale en forme de U, au niveau de l'emplacement de sa connexion avec ladite seconde partie (9), dans lequel ladite seconde partie (9) comprend deux protubérances cylindriques (11) qui s'étendent à l'extérieur sur chaque jambe de sa section transversale en forme de U, et qui viennent en prise par encliquetage dans des trous cylindriques de forme identique (12), dans les jambes opposées de ladite première partie (8).
